# EUROPEAN PATENT APPLICATION

(11) **EP 4 726 550 A1**
(43) Date of publication of application: **15.04.2026**
(21) Application number: 24829894.5
(22) Date of filing: 29.02.2024
(51) Int. Cl.: G06F 9/54, G06F 9/30

(54) **MULTI-THREADED CONCURRENT ACCESS METHOD AND APPARATUS**

(30) Priority: 25.06.2023 CN 202310757395
(71) Applicant: Huawei Technologies Co., Ltd., Shenzhen, Guangdong 518129 (CN)
(72) Inventor: LI, Xiuchang, Shenzhen, Guangdong 518129 (CN)
(74) Representative: Thun, Clemens
(86) International application number: PCT/CN2024/079186
(87) International publication number: WO 2025/001238

(57) **Abstract**

Embodiments of this application disclose a multi-thread concurrent access method, to improve efficiency of concurrent access to a shared resource by a plurality of threads. The method in embodiments of this application includes: A computing device receives a first lock acquire request, where the first lock acquire request is used to request a mutual trust lock for performing a write operation on a shared resource by a first thread, and the mutual trust lock is used for performing a non-exclusive write operation on the shared resource. The computing device issues the mutual trust lock to the first thread based on the first lock acquire request. The first thread and a second thread concurrently perform write operations on the shared resource based on the mutual trust lock, where the second thread is a thread that has acquired the mutual trust lock.

## Description

This application claims priority to Chinese Patent Application No. 202310757395.9, filed with the China National Intellectual Property Administration on June 25, 2023, and entitled "MULTI-THREAD CONCURRENT ACCESS METHOD AND APPARATUS", which is incorporated herein by reference in its entirety.

### TECHNICAL FIELD

Embodiments of this application relate to the field of computers, and in particular, to a multi-thread concurrent access method and apparatus.

### BACKGROUND

A read-write lock mechanism is a common synchronization mechanism in multi-thread programming, and uses a specific algorithm and data structure to balance security and efficiency of read and write operations on a shared resource. When a plurality of threads access a same shared resource, a read-write lock is used to control the access of the threads to the shared resource, to avoid a thread conflict.

Currently, a lock has two states: a write lock state and a read lock state. The write lock state is an exclusive lock. After a write lock is acquired, only one thread can perform read and write operations on the shared resource. When the write lock state is already held, another thread cannot hold the write lock state or the read lock state. The read lock state is a shared lock. The plurality of threads can simultaneously hold the read lock and perform read operations on data.

Currently, a read-write lock capability is used when a plurality of threads access a shared resource. In a case of large-scale concurrency, the shared resource is serially processed by the plurality of threads. When a protected shared resource has a large range, different threads access the protected shared resource in different ranges. For example, when a large structure or a large array is to be locked, to ensure consistency of the protected resource, a write lock is acquired to lock the entire shared resource regardless of that the threads access one field or one array unit or modify a plurality of fields or a plurality of array units. This results in low efficiency of concurrent access to the shared resource by the threads.

### SUMMARY

Embodiments of this application provide a thread concurrent access method and apparatus, to improve efficiency of concurrent access to a shared resource by a plurality of threads.

A first aspect of embodiments of this application provides a multi-thread concurrent access method. The method may be performed by a computing device, or may be performed by a component of the computing device, for example, a processor, a chip, or a chip system of the computing device, or may be implemented by a logic module or software that can implement all or a part of functions of the computing device. For example, the method is performed by the computing device. The method in the first aspect includes: The computing device receives a first lock acquire request. The first lock acquire request is used to request a mutual trust lock for performing a write operation on a shared resource by a first thread, and the mutual trust lock is used for performing a non-exclusive write operation on the shared resource. The computing device is configured to execute the first thread and a second thread, the first thread is configured to perform a write operation on a first data unit of the shared resource, the second thread is configured to perform a write operation on a second data unit of the shared resource, and the first data unit and the second data unit are different data units. The computing device issues the mutual trust lock to the first thread based on the first lock acquire request. After the first thread acquires the mutual trust lock, the first thread and the second thread concurrently perform write operations on the shared resource based on the mutual trust lock. The second thread is a thread that has acquired the mutual trust lock.

Embodiments of this application provide a mutual trust lock state, so that a plurality of threads of the computing device can concurrently perform write operations on different data units of the shared resource by using the mutual trust lock. This eliminates conflict waiting in a write lock state, and improves efficiency of accessing the shared resource by the plurality of threads of the computing device.

In a possible implementation, the computing device is further configured to execute a third thread. The third thread is configured to perform a write operation on a global data unit of the shared resource. The computing device receives a second lock acquire request. The second lock acquire request is used to request the mutual trust lock for performing a concurrent write operation on the shared resource by the third thread. After the first thread or the second thread acquires the mutual trust lock, the third thread waits for the mutual trust lock to be released.

In embodiments of this application, the computing device can issue the mutual trust lock to threads that access different data units of the shared resource. Threads that have a conflict in accessing the data units of the shared resource cannot acquire the mutual trust lock. This improves efficiency of performing write operations by mutual trust threads on the shared resource while ensuring security of performing the write operations on the shared resource.

In a possible implementation, in a process in which the computing device issues the mutual trust lock to the first thread based on the first lock acquire request, when a mutual trust lock status bit of a lock status variable is not set, the computing device sets the mutual trust lock status bit of the lock status variable based on the first lock acquire request, and performs incremental counting on a lock count bit of the lock status variable. When the mutual trust lock status bit of the lock status variable is set, the computing device performs incremental counting on the lock count bit of the lock status variable based on the first lock acquire request.

In embodiments of this application, the computing device adds the mutual trust lock status bit to the lock status variable to record a mutual trust lock status corresponding to the shared resource, and records, by using the mutual trust lock status bit and the lock count bit, a quantity of threads that hold the mutual trust lock. The computing device can further perform incremental counting on the lock count bit based on a lock acquire request, to improve feasibility of multi-thread concurrent access to the shared resource.

In a possible implementation, the computing device receives a first lock release request of the first thread, where the first lock release request is used to request to release the mutual trust lock on the shared resource; when the lock count bit of the lock status variable is greater than 1, performs decremental counting on the lock count bit of the lock status variable based on the first lock release request for the mutual trust lock; and when the lock count bit of the lock status variable is equal to 1, performs decremental counting on the lock count bit of the lock status variable based on the first lock release request for the mutual trust lock, and restores the mutual trust lock status bit of the lock status variable to being not set.

In embodiments of this application, the computing device can perform decremental counting on the lock count bit based on a lock release request. When counting on the lock count bit is decremented to 0, the computing device restores the mutual trust lock status bit to being set, to improve feasibility of multi-thread concurrent access to the shared resource.

In a possible implementation, the computing device is further configured to execute a fourth thread. The fourth thread is a thread that has held the mutual trust lock, and the fourth thread is configured to perform a write operation on the first data unit of the shared resource. The computing device receives a third lock acquire request. The third lock acquire request is used to request a segment lock for performing a write operation on the first data unit of the shared resource by the fourth thread, and the segment lock is used for exclusive access to the first data unit.

In embodiments of this application, the computing device can issue a segment lock to a thread that holds the mutual trust lock. In this way, when a plurality of threads concurrently perform write operations on the shared resource, the thread can perform an exclusive write operation on a data unit of the shared resource. This improves efficiency of performing the write operations on the shared resource by the plurality of threads and security of performing the write operations on the shared resource by the plurality of threads.

In a possible implementation, when the first thread holds the mutual trust lock, another thread cannot hold a write lock and a read lock that correspond to the shared resource. The write lock is used for performing an exclusive write operation on the shared resource, and the read lock is used for performing a non-exclusive read operation on the shared resource. When the first thread holds the write lock, the another thread cannot hold the mutual trust lock and the read lock that correspond to the shared resource. When the first thread holds the read lock, the another thread cannot hold the mutual trust lock and the write lock that correspond to the shared resource.

In embodiments of this application, different lock states corresponding to the shared resource cannot coexist, to improve protection capabilities of different lock states.

In a possible implementation, when the mutual trust lock status bit is not set, the lock count bit indicates a quantity of threads that hold the read lock.

In embodiments of this application, the computing device adds the mutual trust lock status bit, and records a quantity of threads that hold the write lock by using the lock count bit, so that the lock count bit of the read lock is reused, to improve recording efficiency of the lock count bit.

In a possible implementation, the mutual trust lock is used for database transaction management, and a plurality of different threads of the computing device concurrently perform write operations on a transaction status in a database based on the mutual trust lock. The transaction status includes an active state, a committed state, and a rollback state. A transaction in the interactive state is not complete and can continue to execute a database operation. In the committed state, a modification operation of the transaction has been successfully committed to the database, and all changes are permanently saved. In the rollback state, the transaction has been rolled back, canceled, or failed, all operations and changes are canceled, and modified data is restored to a state before the transaction starts.

In embodiments of this application, the computing device can concurrently perform write operations on the transaction status in the database by using the mutual trust lock, to improve concurrent write performance of the transaction status.

In a possible implementation, the mutual trust lock is used for database page management. Database page management means to divide a data file in a database into a group of data blocks of a fixed size, namely, pages. The computing device manages usage and states of the pages, including reading and writing of the pages. A plurality of different threads of the computing device concurrently perform write operations on an entry in a database page based on the mutual trust lock.

In embodiments of this application, the computing device can concurrently perform write operations on the pages in the database by using the mutual trust lock, and lock a single page of the database page for modification and lock different areas of the database page, to improve concurrent write performance of transactions in the database page.

A second aspect of embodiments of this application provides a multi-thread concurrent access apparatus. The apparatus is configured to execute a first thread and a second thread, the first thread is configured to perform a write operation on a first data unit of a shared resource, the second thread is configured to perform a write operation on a second data unit of the shared resource, and the first data unit and the second data unit are different data units. The apparatus includes a transceiver unit and a processing unit. The transceiver unit is configured to receive a first lock acquire request. The first lock acquire request is used to request a mutual trust lock for performing a write operation on the shared resource by the first thread, and the mutual trust lock is used for performing a non-exclusive write operation on the shared resource. The processing unit is configured to issue the mutual trust lock to the first thread based on the first lock acquire request. The first thread and the second thread of the processing unit concurrently perform write operations on the shared resource based on the mutual trust lock. The second thread is a thread that has acquired the mutual trust lock.

In a possible implementation, the apparatus is further configured to execute a third thread. The third thread is configured to perform a write operation on a global data unit of the shared resource. The transceiver unit is further configured to receive a second lock acquire request. The second lock acquire request is used to request the mutual trust lock for performing a concurrent write operation on the shared resource by the third thread. After the first thread or the second thread acquires the mutual trust lock, the third thread of the processing unit waits for the mutual trust lock to be released.

In a possible implementation, the processing unit is specifically configured to: when a mutual trust lock status bit of a lock status variable is not set, set the mutual trust lock status bit of the lock status variable based on the first lock acquire request, and perform incremental counting on a lock count bit of the lock status variable; or when the mutual trust lock status bit of the lock status variable is set, perform incremental counting on the lock count bit of the lock status variable based on the first lock acquire request.

In a possible implementation, the transceiver unit is further configured to receive a first lock release request of the first thread. The first lock release request is used to request to release the mutual trust lock on the shared resource. When the lock count bit of the lock status variable is greater than 1, the processing unit is specifically configured to perform decremental counting on the lock count bit of the lock status variable based on the first lock release request for the mutual trust lock. When the lock count bit of the lock status variable is equal to 1, the processing unit is specifically configured to: perform decremental counting on the lock count bit of the lock status variable based on the first lock release request for the mutual trust lock, and restore the mutual trust lock status bit of the lock status variable to being not set.

In a possible implementation, the apparatus is further configured to execute a fourth thread. The fourth thread is a thread that has held the mutual trust lock, and the fourth thread is configured to perform a write operation on the first data unit of the shared resource. The transceiver unit is further configured to receive a third lock acquire request. The third lock acquire request is used to request a segment lock for performing a write operation on the first data unit of the shared resource by the fourth thread, and the segment lock is used for exclusive access to the first data unit.

In a possible implementation, the processing unit is further configured to: when the first thread holds the mutual trust lock, another thread cannot hold a write lock and a read lock that correspond to the shared resource. The write lock is used for performing an exclusive write operation on the shared resource, and the read lock is used for performing a non-exclusive read operation on the shared resource.

In a possible implementation, the mutual trust lock is used for database transaction management, and a plurality of different threads concurrently perform write operations on a transaction status in a database based on the mutual trust lock.

In a possible implementation, the mutual trust lock is used for database page management, and a plurality of different threads concurrently perform write operations on an entry in a database page based on the mutual trust lock.

A third aspect of embodiments of this application provides a computing device, including a processor. The processor is coupled to a memory, the processor is configured to store instructions, and when the instructions are executed by the processor, the computing device is enabled to perform the method according to any one of the first aspect or the possible implementations of the first aspect.

A fourth aspect of embodiments of this application provides a computing device cluster, including one or more computing devices. The computing device includes a processor, the processor is coupled to a memory, the processor is configured to store instructions, and when the instructions are executed by the processor, the computing device cluster is enabled to perform the method according to any one of the first aspect or the possible implementations of the first aspect.

A fifth aspect of embodiments of this application provides a computer-readable storage medium. The computer-readable storage medium stores instructions, and when the instructions are executed, a computer is enabled to perform the method according to any one of the first aspect or the possible implementations of the first aspect.

A sixth aspect of embodiments of this application provides a computer program product. The computer program product includes instructions, and when the instructions are executed, a computer is enabled to perform the method according to any one of the first aspect or the possible implementations of the first aspect.

It may be understood that, for beneficial effects that can be achieved by any one of the multi-thread concurrent access apparatus, the computing device, the computer-readable medium, the computer program product, or the like provided above, refer to beneficial effects in a corresponding computing system. Details are not described herein again.

### BRIEF DESCRIPTION OF DRAWINGS

FIG. 1 is a diagram of an architecture of a thread concurrent access system according to an embodiment of this application;
FIG. 2 is a schematic flowchart of a thread concurrent access method according to an embodiment of this application;
FIG. 3 is a diagram of different lock states according to an embodiment of this application;
FIG. 4 is a diagram of other different lock states according to an embodiment of this application;
FIG. 5 is a diagram of a lock status variable according to an embodiment of this application;
FIG. 6a is a schematic flowchart of applying for a mutual trust lock according to an embodiment of this application;
FIG. 6b is a schematic flowchart of releasing a mutual trust lock according to an embodiment of this application;
FIG. 7 is a diagram of accessing a shared resource based on a segment lock according to an embodiment of this application;
FIG. 8a is a diagram of a system concurrency comparison according to an embodiment of this application;
FIG. 8b is a diagram of another system concurrency comparison according to an embodiment of this application;
FIG. 9 is a diagram of a thread concurrency apparatus according to an embodiment of this application;
FIG. 10 is a diagram of a structure of a computing device according to an embodiment of this application;
FIG. 11 is a diagram of a structure of a computing device cluster according to an embodiment of this application; and
FIG. 12 is a diagram of a structure of another computing device cluster according to an embodiment of this application.

### DESCRIPTION OF EMBODIMENTS

Embodiments of this application provide a multi-thread concurrent access method and apparatus, to improve multi-thread concurrent access efficiency.

In the specification, claims, and accompanying drawings of this application, the terms "first", "second", "third", "fourth", and the like (if existent) are intended to distinguish between similar objects but do not necessarily indicate a specific order or sequence. It should be understood that data termed in such a way are interchangeable in proper circumstances, so that embodiments described herein can be implemented in other orders than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. To be precise, use of the words such as "example" or "for example" is intended to present a relative concept in a specific manner.

First, a part of terms in embodiments of this application are described, to help a person skilled in the art understand the solutions.

A read-write lock is a concurrency control mechanism used to optimize contention between read and write operations. The read-write lock includes two mutex locks: a read lock and a write lock. A plurality of read locks can be simultaneously acquired provided that no write lock is acquired. When a write lock is acquired, all threads for read and write operations are blocked until the write lock is released. When one thread acquires the write lock, other threads cannot acquire the read lock or the write lock. When one thread acquires the read lock, other threads can acquire only the read lock but cannot acquire the write lock.

An atomic operation is an operation that can be completed in a single inseparable step. In computer science, an atomic operation is usually an operation in a multi-thread environment. The operation is either completely successfully executed or completely failed and cannot be partially completed. The atomic operation can ensure data synchronization and consistency in the multi-thread environment in a computer multi-processing system. The operation includes reading, writing, comparing, and exchanging. When the atomic operation is used, each operation is atomic.

A segment lock is a manner of using a lock. A computing device divides a shared resource into a plurality of segments, and each segment has an independent lock to control concurrent access. In this way, a range of concurrent access is narrowed down, lock contention is reduced, and concurrent performance is improved.

With reference to the accompanying drawings, the following describes a multi-thread concurrent access method and apparatus provided in embodiments of this application.

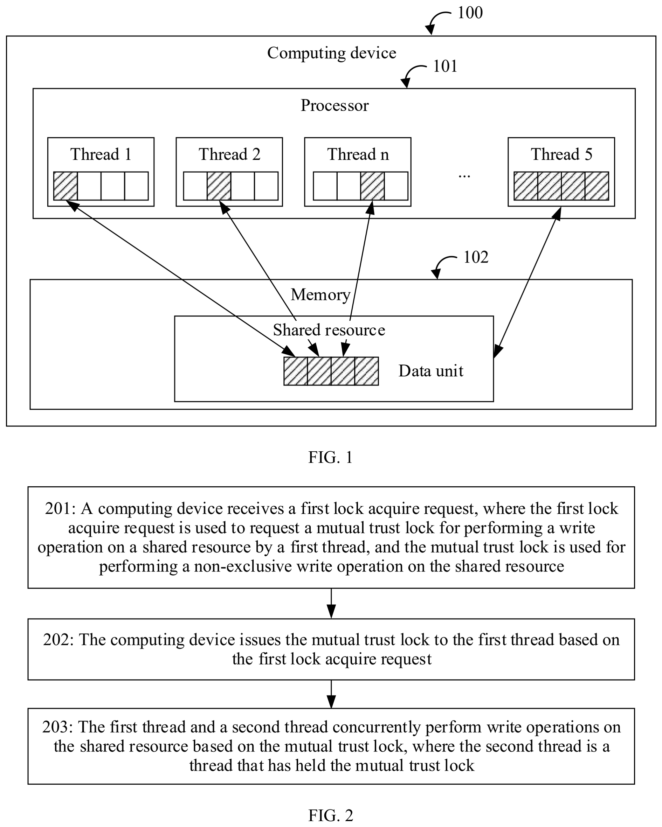

FIG. 1 is a diagram of an architecture of a thread concurrent access system according to an embodiment of this application. In the example shown in FIG. 1, a computing device system 100 includes a processor 101 and a memory 102. A plurality of threads run in the processor 101, a shared resource is stored in the memory 102, and the plurality of threads in the processor 101 can access the shared resource in the memory 102. The following describes specific functions of parts of the computing device system 100.

The processor 101 is configured to execute a computing task of the computing device. When the processor 101 executes the computing task, the processor 101 may decompose the computing task into a plurality of threads for execution. The processor 101 can control time slices of different threads, to ensure that each thread can be executed. For example, in the example shown in FIG. 1, the processor 101 can schedule thread 1, thread 2, and thread n to access different data units of the shared resource.

The processor 101 is further configured to control an access mechanism in which the plurality of threads access shared data. The processor 101 can control a lock status corresponding to the shared resource. The lock status corresponding to the shared resource includes a write lock state, a read lock state, and a mutual trust lock state. In the write lock state, only one thread is allowed to perform a write operation on the shared resource. In the read lock state, a plurality of threads are allowed to perform read operations on the shared resource. In the mutual trust lock state, a plurality of mutual trust threads concurrently perform write operations on the shared resource. The mutual trust threads are threads that do not simultaneously access a same data unit of the shared resource.

The memory 102 is configured to store the shared resource of the computing device, and the shared resource includes data generated by the processor 101 during computing task execution. The processor 101 can access the shared resource stored in the memory 102. For example, in the example shown in FIG. 1, the processor 101 can read data of the 1^{st} data unit from the shared resource in the memory 102 by executing thread 1, or the processor 101 can write data into the 2^{nd} data unit of the shared resource in the memory 102 by executing thread 2, or the processor 101 can access all data units of the shared resource in the memory 102 by executing thread 5.

FIG. 2 is a schematic flowchart of multi-thread concurrent access according to an embodiment of this application. In the example shown in FIG. 2, the multi-thread concurrent access provided in this embodiment of this application includes the following steps.

201: A computing device receives a first lock acquire request, where the first lock acquire request is used to request a mutual trust lock for performing a write operation on a shared resource by a first thread, and the mutual trust lock is used for performing a non-exclusive write operation on the shared resource.

In a process in which the computing device executes a computing task, the computing device accesses the shared resource in a memory by executing a plurality of threads. To avoid a shared resource access conflict, only a thread that holds a lock can access the shared resource. For example, a thread that holds a write lock can perform an exclusive write operation on the shared resource, and a plurality of threads that hold a read lock can concurrently perform read operations on the shared resource.

This embodiment of this application further provides a lock status, namely, a mutual trust lock. A plurality of threads that hold the mutual trust lock in the computing device can concurrently perform write operations on the shared resource. The following describes the mutual trust lock status provided in this embodiment of this application with reference to the first thread and a second thread.

The computing device receives the first lock acquire request. The first lock acquire request is used to request the mutual trust lock for performing the write operation on the shared resource by the first thread, and the mutual trust lock is used for performing the non-exclusive write operation on the shared resource. In other words, the plurality of threads that hold the mutual trust lock can concurrently perform write operations on the shared resource. The computing device can issue the mutual trust lock to a plurality of mutual trust threads. The plurality of mutual trust threads are threads that do not simultaneously access a same data unit of the shared resource. For example, the first thread performs a write operation on a first data unit of the shared resource, the second thread performs a write operation on a second data unit of the shared resource, and the first data unit and the second data unit are different data units. In this case, the first thread and the second thread are mutual trust threads.

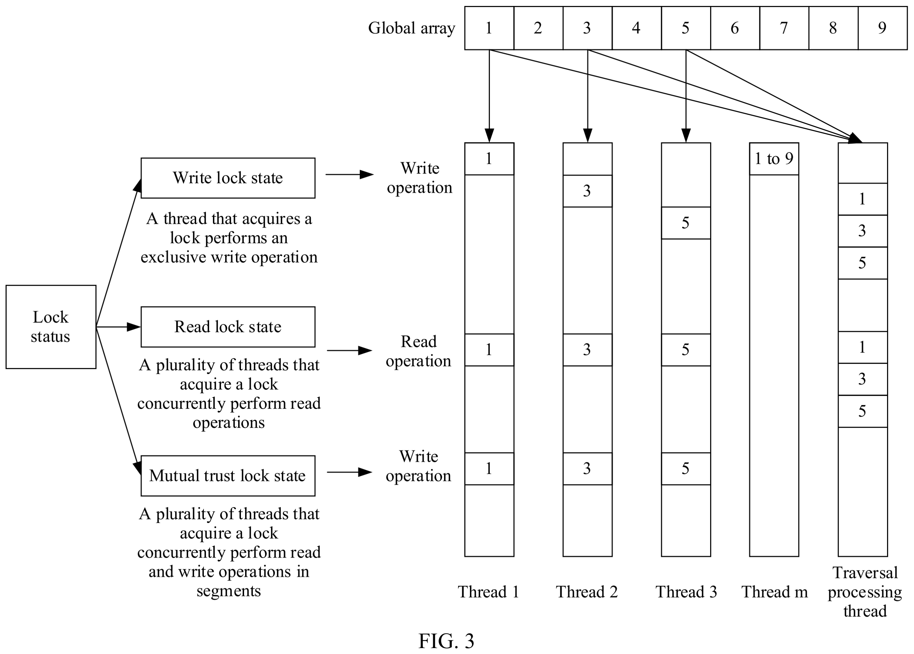

FIG. 3 is a diagram of different lock states according to an embodiment of this application. In the example shown in FIG. 3, a lock status includes a write lock state, a read lock state, and a mutual trust lock state. In the write lock state, a thread that acquires a lock can perform an exclusive read or write operation on the shared resource. In the read lock state, a plurality of threads that acquire a lock can concurrently perform read operations on the shared resource. In the mutual trust lock state, a plurality of threads that acquire a lock can concurrently perform read and write operations on the shared resource.

For example, in the example shown in FIG. 3, after thread 1 acquires a write lock, when thread 1 performs a write operation on global data of the shared resource, thread 2 and thread 3 cannot perform write operations on a global array of the shared resource, but wait for thread 1 to perform the write operation. Thread 1 performs an exclusive write operation on the global data of the shared resource. After thread 1 releases the write lock, thread 2 acquires the write lock, and thread 2 performs an exclusive write operation on the global data of the shared resource.

For another example, in the example shown in FIG. 3, thread 1, thread 2, and thread 3 can simultaneously acquire a read lock, and thread 1 concurrently performs a read operation on the global data of the shared resource. Thread 1 performs a read operation on data unit 1 of the global array, thread 2 performs a read operation on data unit 3 of the global array, and thread 3 performs a read operation on data unit 5 of the global array.

In the example shown in FIG. 3, when thread 1, thread 2, and thread n respectively access different data units of the global data, thread 1, thread 2, and thread 3 can request a mutual trust lock from the computing device. After thread 1, thread 2, and thread n acquire the mutual trust lock, thread 1, thread 2, and thread 3 can concurrently access the global array of the shared resource. For example, thread 1 performs a write operation on data unit 1 of the global array, thread 2 performs a write operation on the data unit 2 of the global array, and thread 3 performs a write operation on data unit 5 of the global array.

In a possible implementation, when the first thread holds the mutual trust lock, another thread cannot hold a write lock and a read lock that correspond to the shared resource. The write lock is used for performing an exclusive write operation on the shared resource, and the read lock is used for performing a non-exclusive read operation on the shared resource.

In this embodiment of this application, different lock states cannot coexist. The write lock can be held by only one thread at a time. When the lock status is the write lock state, another thread cannot hold the read lock or the mutual trust lock. The read lock may be simultaneously held by a plurality of threads. When the lock status is the read lock state, another thread cannot hold the write lock or the mutual trust lock. The mutual trust lock may be simultaneously held by a plurality of threads. When the lock status is the mutual trust lock state, another thread cannot hold the write lock or the read lock.

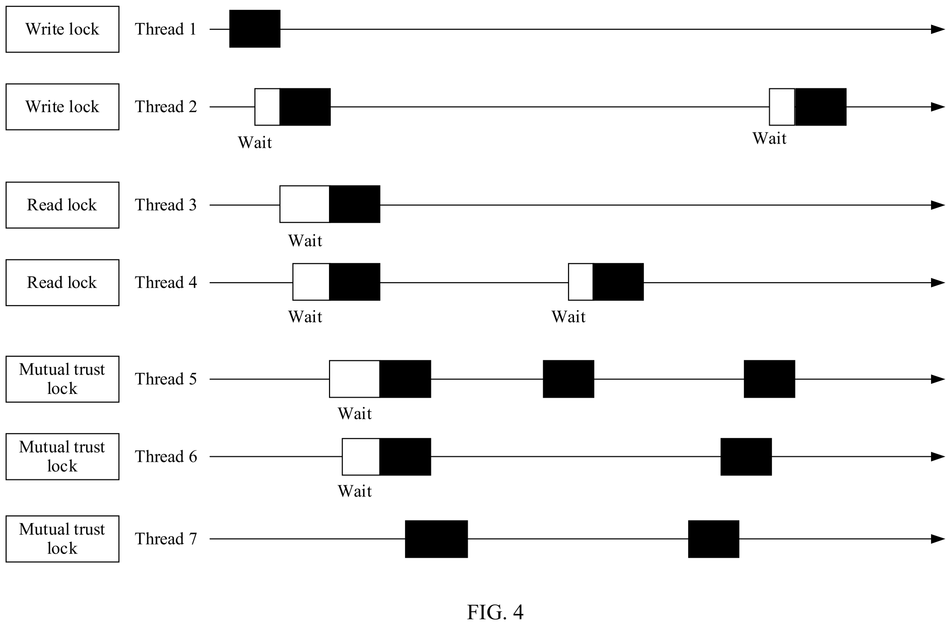

FIG. 4 is a diagram of a relationship between different lock states according to an embodiment of this application. In the example shown in FIG. 4, when a thread holds a write lock, another thread cannot hold the write lock, a read lock, or a mutual trust lock. When a thread holds the read lock, another thread cannot hold the write lock or the mutual trust lock. When a thread holds the mutual trust lock, another thread cannot hold the write lock or the read lock.

For example, in the example shown in FIG. 4, when thread 1 is in a write lock state, thread 2 to thread 7 cannot acquire the write lock, the read lock, or the mutual trust lock, and thread 2 to thread 7 wait for thread 1 to release the write lock. After thread 1 releases the write lock, thread 2 acquires the write lock, and thread 1, and thread 3 to thread 7 cannot acquire the write lock, the read lock, or the mutual trust lock. When thread 2 releases the write lock, thread 3 and thread 4 acquire the read lock, and thread 3 and thread 4 can perform concurrent read operations on the shared resource. In this case, thread 1, thread 2, and thread 5 to thread 7 cannot acquire the write lock and the mutual trust lock.

In the example shown in FIG. 4, when thread 5 is in a mutual trust lock state, thread 1 to thread 6 and thread 5 to thread 7 cannot acquire the write lock and the read lock, and thread 6 and thread 7 can acquire the mutual trust lock. Because thread 5 to thread 7 are mutual trust threads, after acquiring the mutual trust lock, thread 5 to thread 7 can concurrently perform write operations on different data units of the shared resource.

In a possible implementation, the computing device receives a second lock acquire request. The second lock acquire request is used to request the mutual trust lock for performing a concurrent write operation on the shared resource by a third thread. The third thread is configured to perform a write operation on a global data unit of the shared resource. Because there is a conflict between the first thread and the third thread that perform the write operations on the data unit of the shared resource, the first thread and the third thread are not mutual trust threads. After the first thread or the second thread acquires the mutual trust lock, the third thread cannot acquire the mutual trust lock, and waits for the mutual trust lock to be released.

Still refer to FIG. 3. In the example shown in FIG. 3, because thread 1, thread 2, and thread 3 access different data units of the global data, thread 1, thread 2, and thread 3 can simultaneously hold the mutual trust lock corresponding to the shared resource. When thread m needs to access the global array, thread m and each of thread 1, thread 2, and thread n are not mutual trust threads. Therefore, thread m cannot acquire the mutual trust lock.

In a possible implementation, the computing device receives a write lock application request, and the computing device reads a lock status variable to determine whether the computing device is in the read lock state, the write lock state, or the mutual trust lock state. If a lock has been acquired, the write lock application fails, and the computing device re-applies for the write lock. During this period, the computing device may immediately retry or wait to be woken up by another release procedure. If the lock is not acquired, a variable, namely, a write lock status bit, needs to be set, and an atomic operation is performed on the variable. If modification succeeds, the write lock is successfully acquired. If the modification fails, it indicates that another task has first acquired the lock to modify a variable value during this period. In this case, the lock fails to be acquired, and a retry, waiting, or other procedure is performed.

In a possible implementation, the computing device receives a read lock application request, and the computing device first reads the lock status variable to determine whether the computing device is in the write lock state or the mutual trust lock state. If the write lock or the mutual trust lock has been acquired, the read lock application fails, and the computing device re-applies for the read lock. During this period, the computing device may immediately retry or wait to be woken up by another release procedure. If the write lock or the mutual trust lock is not acquired, a variable, namely, a read lock status bit, needs to be increased by 1, and an atomic operation is performed on the lock status variable. If modification succeeds, the read lock is successfully acquired. If the modification fails, it indicates that another task has modified a variable value during this period. In this case, the lock fails to be acquired, and a retry or other procedure is performed.

202: The computing device issues the mutual trust lock to the first thread based on the first lock acquire request.

The computing device issues the mutual trust lock to the first thread based on the first lock acquire request. Specifically, the computing device modifies the lock status variable corresponding to the shared resource based on the first lock acquire request. The lock status variable in this embodiment of this application includes the write lock status bit, a mutual trust lock status bit, and a lock count bit. The write lock status bit indicates whether the lock is in the write lock state, the mutual trust lock status bit indicates whether the lock is in the mutual trust lock state, and the lock count bit indicates a quantity of threads that hold the read lock or a quantity of threads that hold the mutual trust lock. Specifically, when the mutual trust lock status bit is not set, the lock count bit indicates the quantity of threads that hold the read lock. When the mutual trust lock status bit is set, the lock count bit indicates the quantity of threads that hold the mutual trust lock.

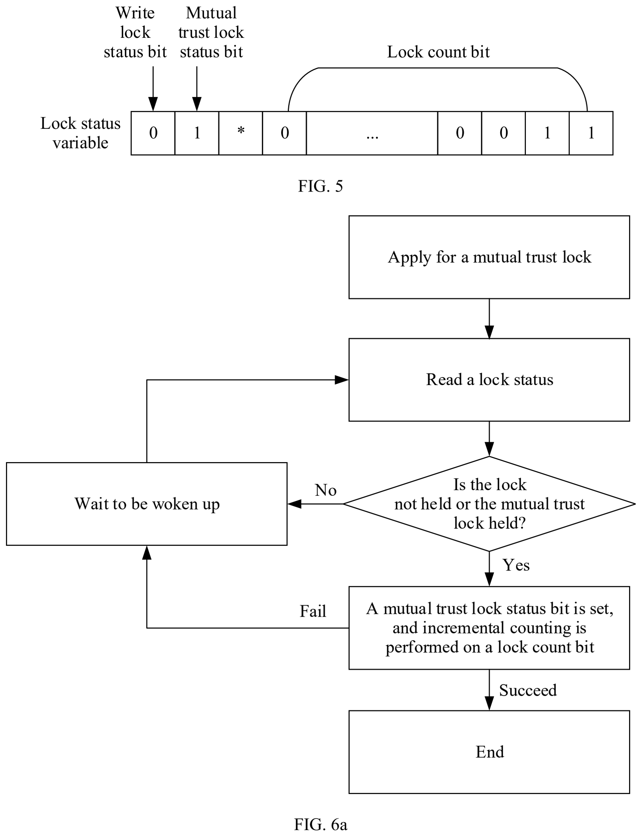

FIG. 5 is a diagram of a lock status variable according to an embodiment of this application. In the example shown in FIG. 5, the 1^{st} bit of the lock status variable is a write lock status bit. When the write lock status bit is not set, no thread is in a write lock state. When the write lock status bit is set, a thread is in the write lock state, and the thread that holds a write lock can perform an exclusive write operation on a shared resource. The 2^{nd} bit of the lock status variable is a mutual trust lock status bit. When the mutual trust lock status bit is not set, a lock count bit is a count of threads that hold a read lock. When the mutual trust lock status bit is set, at least one thread is in the mutual trust lock state, and the lock count bit is a count of threads that hold a mutual trust lock.

In the example shown in FIG. 5, the write lock status bit of the lock status variable is 0, the mutual trust lock status bit is 1, and the lock count bit is 11 (binary). In this case, the computing device has three threads in the mutual trust lock state, and the three threads in the mutual trust lock state can concurrently perform write operations on different data units of the shared resource.

In a possible implementation, when the mutual trust lock status bit of the lock status variable is not set, the computing device sets the mutual trust lock status bit of the lock status variable based on the first lock acquire request, and performs incremental counting on the lock count bit of the lock status variable. When the mutual trust lock status bit of the lock status variable is set, the computing device performs incremental counting on the lock count bit of the lock status variable based on the first lock acquire request.

FIG. 6a is a schematic flowchart of applying for a mutual trust lock according to an embodiment of this application. In the example shown in FIG. 6a, after a thread of a computing device requests to apply for a mutual trust lock, the computing device queries a current lock status. When the lock status is a read lock state or a write lock state, the thread of the computing device waits to acquire a mutual trust lock. When the lock status is that the lock is not held or is a mutual trust lock state, the thread of the computing device can acquire the mutual trust lock. After the thread of the computing device acquires the mutual trust lock, the computing device sets a mutual trust lock status bit of a lock status variable and performs incremental counting on a lock count bit.

Still refer to FIG. 5. In the example shown in FIG. 5, the write lock state of the lock status variable is 0, the mutual trust lock status bit is 1, and the lock count bit is 11 (binary). When a thread applies for the mutual trust lock, three threads hold the mutual trust lock, the computing device increases counting on the lock count bit of the lock status variable by 1 based on the lock acquire request, and a modified lock count bit is 100 (binary), in other words, four threads hold the mutual trust lock.

In a possible implementation, the computing device receives a first lock release request of the first thread, where the first lock release request is used to request to release the mutual trust lock on the shared resource; when the lock count bit of the lock status variable is greater than 1, performs decremental counting on the lock count bit of the lock status variable based on the first lock release request for the mutual trust lock; and when the lock count bit of the lock status variable is equal to 1, performs decremental counting on the lock count bit of the lock status variable based on the first lock release request for the mutual trust lock, and restores the mutual trust lock status bit of the lock status variable to being not set.

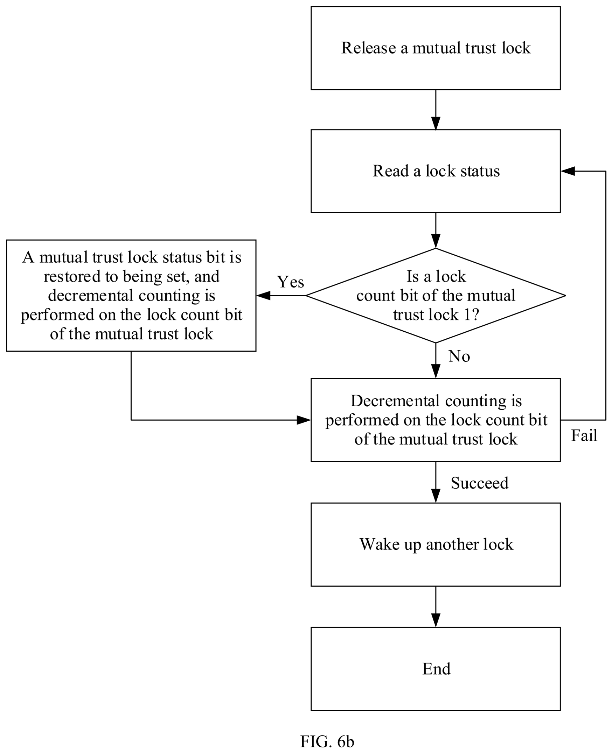

FIG. 6b is a schematic flowchart of releasing a mutual trust lock according to an embodiment of this application. In the example shown in FIG. 6b, after a thread of a computing device requests to release a mutual trust lock, the computing device queries a current lock status, and performs decremental counting on a lock count bit of a lock status variable. When the lock count bit of the lock status variable is 1, the computing device restores a mutual trust lock status bit to being set after performing decremental counting on the lock count bit of the lock status variable. After the mutual trust lock state is restored to being set, the mutual trust lock is released.

Still refer to FIG. 5. In the example shown in FIG. 5, the write lock state of the lock status variable is 0, the mutual trust lock status bit is 1, and the lock count bit is 11 (binary). When a thread applies for releasing the mutual trust lock, three threads hold the mutual trust lock, the computing device decreases counting on the lock count bit of the lock status variable by 1 based on the lock release request, and a modified lock count bit is 10 (binary), in other words, four threads hold the mutual trust lock.

In a possible implementation, the computing device is further configured to execute a fourth thread, the fourth thread is a thread that has held the mutual trust lock, and the fourth thread is configured to perform a write operation on the first data unit of the shared resource. The computing device receives a third lock acquire request. The third lock acquire request is used to request a segment lock for performing a write operation on the first data unit of the shared resource by the fourth thread, and the segment lock is used for exclusive access to the first data unit. When the fourth thread holds the segment lock, the fourth thread can exclusively access the first data unit of the shared resource.

In this embodiment of this application, when threads that hold the mutual trust lock need to access a same data unit of the shared resource, the computing device may control, by using the segment lock, the threads that hold the mutual trust lock to serially access the same data unit of the shared resource. For example, the first thread that holds the mutual trust lock and the fourth thread that holds the mutual trust lock both need to access the first data unit of the shared resource, and the computing device may control, by using the segment lock, the first thread and a second hyper-thread to serially access the first data unit.

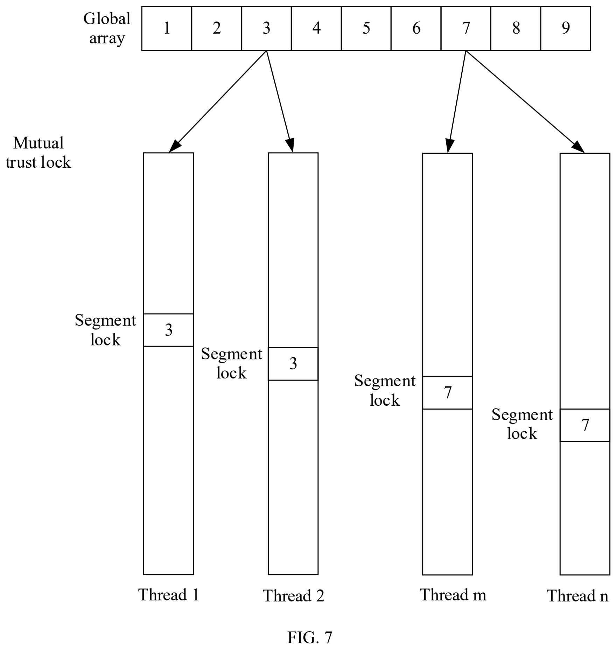

FIG. 7 is a diagram of accessing a shared resource based on a segment lock according to an embodiment of this application. In the example shown in FIG. 7, thread 1 and thread 2 are threads that hold a mutual trust lock. Thread 1 and thread 2 can concurrently access different data units in a global array. When thread 1 and thread 2 concurrently access data unit 3, a computing device controls, by using a segment lock, thread 1 and thread 2 to serially access data unit 3. When thread 1 holds the segment lock corresponding to data unit 3, thread 1 can perform a write operation on data unit 3. After thread 1 releases the segment lock corresponding to data unit 3, thread 2 can acquire the segment lock corresponding to data unit 3, and perform an exclusive write operation on data unit 3.

Similarly, in the example shown in FIG. 7, thread m and thread n are also threads that hold a mutual trust lock. The computing device controls, by using a segment lock, thread m and thread n to serially access data unit 7. When thread m holds the segment lock corresponding to data unit 7, thread m can perform a write operation on data unit 7. After thread n releases the segment lock corresponding to data unit 7, thread n can acquire the segment lock corresponding to data unit 7, and perform an exclusive write operation on data unit 7.

In the example shown in FIG. 7, the computing device can issue the segment lock to thread n and thread m that hold the mutual trust lock, so that when thread n and thread m concurrently perform write operations on the shared resource, thread n and thread m can perform exclusive write operations on data unit 7 of the shared resource in segments, to improve security of performing write operations on the shared resource by a plurality of threads.

In this embodiment of this application, the computing device may acquire a child lock at a finer granularity, namely, the segment lock, based on the mutual trust lock. The computing device can modify different data units of the shared resource by using the mutual trust lock, and protect, by using the segment lock, a same data unit in the shared resource to be only serially modified, to improve security of performing write operations on the same data unit of the shared resource by a plurality of threads.

203: The first thread and the second thread concurrently perform write operations on the shared resource based on the mutual trust lock, where the second thread is a thread that has held the mutual trust lock.

After the first thread acquires the mutual trust lock, the first thread and the second thread concurrently perform write operations on the shared resource. The second thread is a thread that has acquired the mutual trust lock. It should be noted that a quantity of first threads and a quantity of second threads are not limited in embodiments of this application.

In a possible implementation, the mutual trust lock is used for database transaction management, and a plurality of different threads of the computing device concurrently perform write operations on a transaction status in a database based on the mutual trust lock. The transaction status includes an active state, a committed state, and a rollback state. A transaction in the interactive state is not complete and can continue to execute a database operation. In the committed state, a modification operation of the transaction has been successfully committed to the database, and all changes are permanently saved. In the rollback state, the transaction has been rolled back, canceled, or failed, all operations and changes are canceled, and modified data is restored to a state before the transaction starts.

For example, in a database openGauss, the computing device needs to update a transaction status when committing a transaction. The transaction status is an array. The computing device performs global management on transaction status data and periodically performs snapshot scanning on a transaction status array. Therefore, the computing device needs to acquire a lock of the entire array, so that a thread of the computing device can access or modify only one transaction array unit at a time. The computing device modifies a read lock and a write lock of the thread to a mutual trust lock, to improve a write operation concurrency capability of the transaction status.

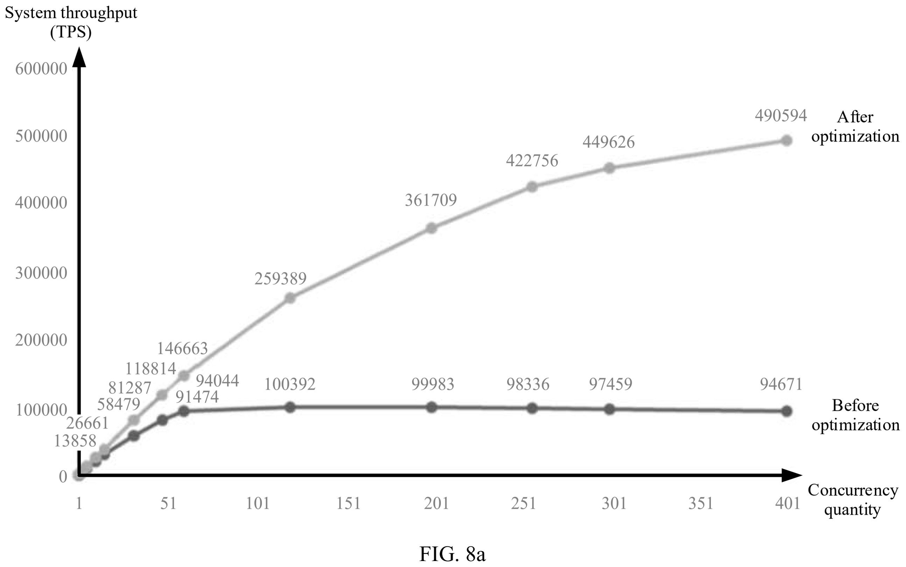

FIG. 8a is a diagram of improving a concurrent capability of a computing device by using a mutual trust lock according to an embodiment of this application. In a coordinate system shown in FIG. 8a, a horizontal coordinate is a concurrency quantity, and a vertical coordinate is a quantity of transactions per second (transactions per second, TPS) of a computing device. The computing device can optimize a transaction update (update) operation on a database by using a mutual trust lock. It can be learned from the example shown in FIG. 8a that after the computing device optimizes the transaction update operation by using the mutual trust lock, the TPS of the transaction update operation is increased from 100,000 per second to 490,000 per second, and is increased by five times.

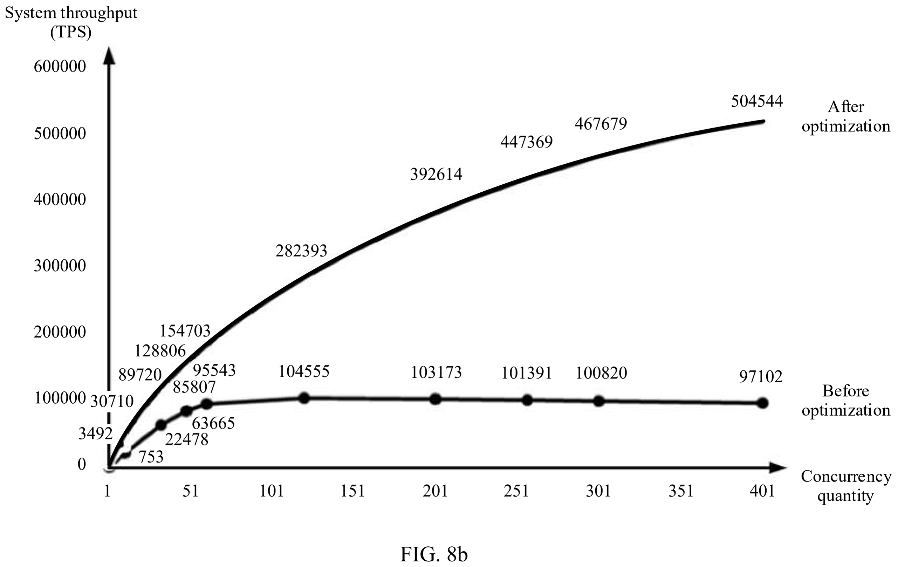

FIG. 8b is a diagram of improving a concurrent capability of a computing device by using a mutual trust lock according to an embodiment of this application. In the example shown in FIG. 8b, a computing device can optimize a transaction insert (insert) operation on a database by using a mutual trust lock. It can be learned from the example shown in FIG. 8b that after the computing device optimizes the transaction insert operation by using the mutual trust lock, the TPS of the computing device for performing the transaction insert operation is increased from 100,000 per second to 500,000 per second, and is increased by five times.

In a possible implementation, the mutual trust lock is used for database page management. Database page management means to divide a data file in a database into a group of data blocks of a fixed size. The computing device manages usage and states of the pages, including reading and writing of the pages. A plurality of different threads of the computing device concurrently perform write operations on an entry in the database based on the mutual trust lock.

For example, in a MySQL-based database, when the computing device needs to perform a write operation on a plurality of entries in a database page, a plurality of threads of the computing device can concurrently perform write operations on different entries in the database page by using the mutual trust lock, to improve efficiency of managing the data page by the computing device.

It should be noted that the mutual trust lock provided in embodiments of this application may not be limited to a specific product. Software such as an operating system and a database can implement and use the mutual trust lock. When application software, middleware, and underlying software need to use the mutual trust lock, the application software, the middleware, and the underlying software may invoke a mutual trust lock library function interface provided by the operating system, or may directly implement a mutual trust lock function in the software. This is not specifically limited.

It can be learned from the foregoing embodiments that, in embodiments of this application, a plurality of threads of the computing device concurrently perform write operations on different data units of the shared resource by using the mutual trust lock, to improve efficiency of accessing the shared resource by the plurality of threads of the computing device.

The foregoing describes the multi-thread concurrent access method provided in embodiments of this application. The following describes a multi-thread concurrent access apparatus provided in embodiments of this application.

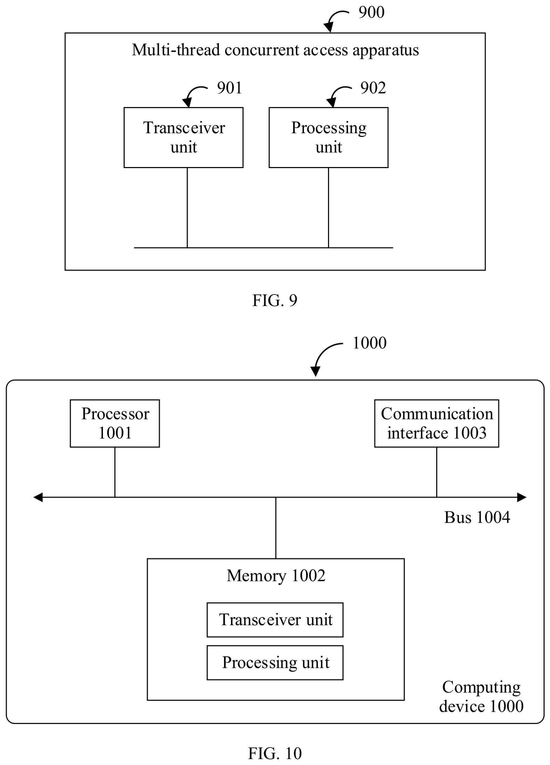

FIG. 9 is a diagram of a structure of a multi-thread concurrent access apparatus according to an embodiment of this application. In the example shown in FIG. 9, the multi-thread concurrent access apparatus is configured to implement the steps performed by the computing device in the foregoing embodiments. The multi-thread concurrent access apparatus 900 includes a transceiver unit 901 and a processing unit 902.

The transceiver unit 901 is configured to receive a first lock acquire request. The first lock acquire request is used to request a mutual trust lock for performing a write operation on a shared resource by a first thread, and the mutual trust lock is used for performing a non-exclusive write operation on the shared resource. The processing unit 902 is configured to issue the mutual trust lock to the first thread based on the first lock acquire request. The first thread and a second thread of the processing unit 902 concurrently perform write operations on the shared resource based on the mutual trust lock. The second thread is a thread that has acquired the mutual trust lock. The first thread is configured to perform a write operation on a first data unit of the shared resource, the second thread is configured to perform a write operation on a second data unit of the shared resource, and the first data unit and the second data unit are different data units.

In a possible implementation, the apparatus is further configured to execute a third thread. The third thread is configured to perform a write operation on a global data unit of the shared resource. The transceiver unit 901 is further configured to receive a second lock acquire request. The second lock acquire request is used to request the mutual trust lock for performing a concurrent write operation on the shared resource by the third thread. After the first thread or the second thread acquires the mutual trust lock, the third thread of the processing unit 902 waits for the mutual trust lock to be released.

In a possible implementation, the processing unit 902 is specifically configured to: when a mutual trust lock status bit of a lock status variable is not set, set the mutual trust lock status bit of the lock status variable based on the first lock acquire request, and perform incremental counting on a lock count bit of the lock status variable; or when the mutual trust lock status bit of the lock status variable is set, perform incremental counting on the lock count bit of the lock status variable based on the first lock acquire request.

In a possible implementation, the transceiver unit 901 is further configured to receive a first lock release request of the first thread. The first lock release request is used to request to release the mutual trust lock on the shared resource. When the lock count bit of the lock status variable is greater than 1, the processing unit 902 is specifically configured to perform decremental counting on the lock count bit of the lock status variable based on the first lock release request for the mutual trust lock. When the lock count bit of the lock status variable is equal to 1, the processing unit 902 is specifically configured to: perform decremental counting on the lock count bit of the lock status variable based on the first lock release request for the mutual trust lock, and restore the mutual trust lock status bit of the lock status variable to being not set.

In a possible implementation, the apparatus is further configured to execute a fourth thread. The fourth thread is a thread that has held the mutual trust lock, and the fourth thread is configured to perform a write operation on the first data unit of the shared resource. The transceiver unit 901 is further configured to receive a third lock acquire request. The third lock acquire request is used to request a segment lock for performing a write operation on the first data unit of the shared resource by the fourth thread, and the segment lock is used for exclusive access to the first data unit.

In a possible implementation, the processing unit 902 is further configured to: when the first thread holds the mutual trust lock, another thread cannot hold a write lock and a read lock that correspond to the shared resource. The write lock is used for performing an exclusive write operation on the shared resource, and the read lock is used for performing a non-exclusive read operation on the shared resource.

In a possible implementation, the mutual trust lock is used for database transaction management, and a plurality of different threads concurrently perform write operations on a transaction status in a database based on the mutual trust lock.

In a possible implementation, the mutual trust lock is used for database page management, and a plurality of different threads concurrently perform write operations on an entry in a database page based on the mutual trust lock.

It should be understood that division of the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or a part of the units may be implemented in a form of software invoked by a processing element, and a part of the units may be implemented in a form of hardware. For example, each unit may be a separately disposed processing element, or may be integrated into a chip of the apparatus for implementation. In addition, each unit may alternatively be stored in a memory in a form of program to be invoked by a processing element of the apparatus to perform a function of the unit. In addition, all or a part of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

It should be noted that, for ease of description, the foregoing method embodiments are described as a series of action combinations. However, a person skilled in the art should learn that the present invention or this application is not limited by the described action sequence. In addition, a person skilled in the art should also learn that embodiments described in this specification are all preferred embodiments, and related actions are not necessarily required in the present invention or this application.

Another appropriate step combination that can be figured out by a person skilled in the art based on the foregoing described content also falls within the protection scope of the present invention or this application. In addition, a person skilled in the art should also learn that embodiments described in this specification are all preferred embodiments, and related actions are not necessarily required in the present invention or this application.

FIG. 10 is a diagram of a structure of a computing device according to an embodiment of this application. As shown in FIG. 10, the computing device 1000 includes a processor 1001, a memory 1002, a communication interface 1003, and a bus 1004. The processor 1001, the memory 1002, and the communication interface 1003 are coupled through the bus (not marked in the figure). The memory 1002 stores instructions. When the executable instructions in the memory 1002 are executed, the computing device 1000 performs the method performed by the computing device in the foregoing method embodiment.

The computing device 1000 may be one or more integrated circuits configured to implement the foregoing method, for example, one or more application-specific integrated circuits (application specific integrated circuit, ASIC), one or more microprocessors (digital signal processor, DSP), one or more field programmable gate arrays (field programmable gate array, FPGA), or a combination of at least two of these integrated circuit forms. For another example, when the unit in the apparatus is implemented in a form of program scheduled by a processing element, the processing element may be a general-purpose processor, for example, a central processing unit (central processing unit, CPU) or another processor that may invoke the program. For still another example, the units may be integrated and implemented in a form of system-on-a-chip (system-on-a-chip, SOC).

The processor 1001 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory 1002 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1002 stores executable program code, and the processor 1001 executes the executable program code to separately implement functions of the foregoing transceiver unit and processing unit, to implement the foregoing multi-thread concurrent access method. In other words, the memory 1002 stores instructions for performing the foregoing multi-thread concurrent access method.

The communication interface 1003 uses a transceiver module, for example, but not limited to, a network interface card or a transceiver, to implement communication between the computing device 1000 and another device or a communication network.

The bus 1004 may include a power bus, a control bus, a status signal bus, and the like in addition to a data bus. The bus may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The bus may be classified into an address bus, a data bus, a control bus, and the like.

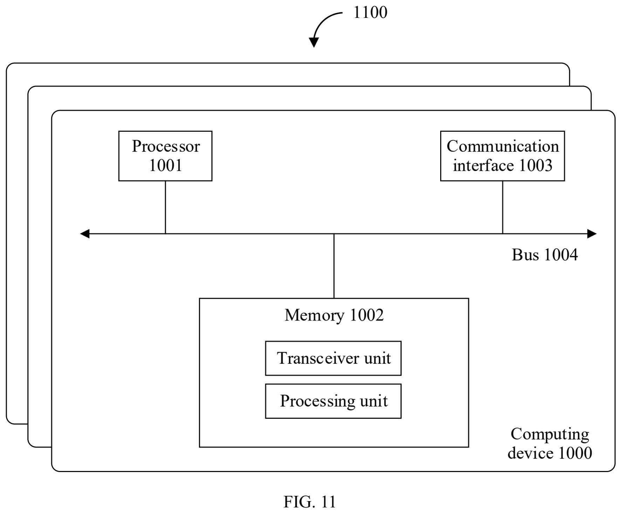

FIG. 11 is a diagram of a computing device cluster according to an embodiment of this application. As shown in FIG. 11, the computing device cluster 1100 includes at least one computing device 1000.

As shown in FIG. 11, the computing device cluster 1100 includes at least one computing device 1000. A memory 1002 in one or more computing devices 1000 in the computing device cluster 1100 may store same instructions for performing the foregoing multi-thread concurrent access method.

In some possible implementations, the memory 1002 in the one or more computing devices 1000 in the computing device cluster 1100 may alternatively separately store a part of instructions for performing the foregoing multi-thread concurrent access method. In other words, a combination of the one or more computing devices 1000 may jointly execute the instructions for performing the foregoing multi-thread concurrent access method.

It should be noted that memories 1002 in different computing devices 1000 in the computing device cluster 1100 may store different instructions for respectively performing a part of functions of the foregoing multi-thread concurrent access apparatus. In other words, the instructions stored in the memories 1002 in the different computing devices 1000 may be used to implement functions of one or more modules in the apparatus.

In some possible implementations, the one or more computing devices 1000 in the computing device cluster 1100 may be connected through a network. The network may be a wide area network, a local area network, or the like.

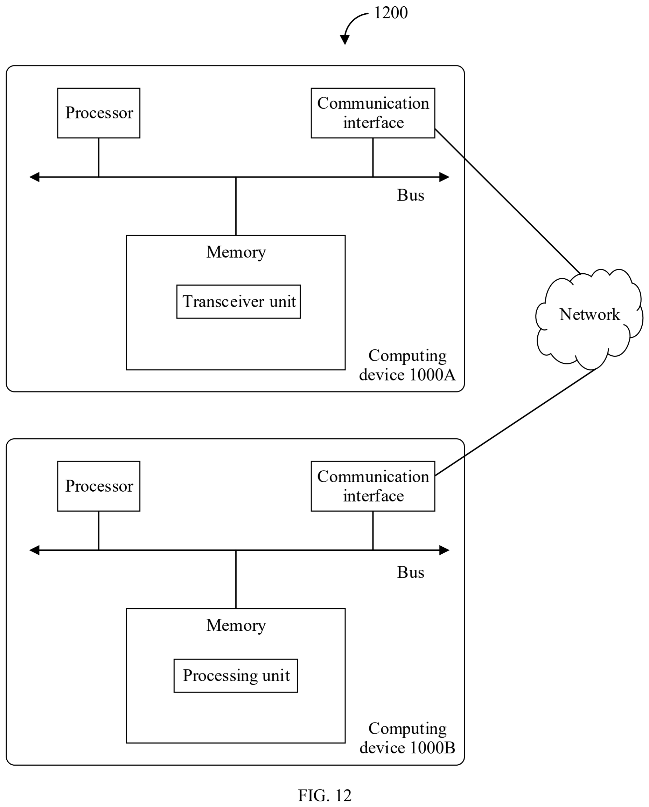

FIG. 12 is a diagram in which computer devices in a computer cluster are connected through a network according to an embodiment of this application. As shown in FIG. 12, two computing devices 1000A and 1000B are connected via a network. Specifically, each computing device is connected to the network through a communication interface in the computing device.

In a possible implementation, a memory in the computing device 1000A stores instructions for performing a function of a transceiver unit. In addition, a memory in the computing device 1000B stores instructions for performing a function of a processing unit.

It should be understood that a function of the computing device 1000A shown in FIG. 12 may alternatively be completed by a plurality of computing devices. Similarly, functions of the computing device 1000B may alternatively be completed by a plurality of computing devices.

In another embodiment of this application, a computer-readable storage medium is further provided. The computer-readable storage medium stores computer-executable instructions. When a processor of a device executes the computer-executable instructions, the device performs the method performed by the computing device in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the computing device in the foregoing method embodiment.

It may be clearly understood by a person skilled in the art that, for the purpose of convenient and brief description, for a detailed operating process of the foregoing system, apparatus, and unit, refer to a corresponding process in the foregoing method embodiment. Details are not described herein again.

In the several embodiments provided in this application, it should be understood that the disclosed system, apparatus and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (ROM, read-only memory), a random access memory (RAM, random access memory), a diskette, or an optical disc.

## Claims

1. A multi-thread concurrent access method, applied to a computing device, wherein the computing device is configured to execute a first thread and a second thread, the first thread is configured to perform a write operation on a first data unit of a shared resource, the second thread is configured to perform a write operation on a second data unit of the shared resource, the first data unit and the second data unit are different data units, and the method comprises:
receiving a first lock acquire request, wherein the first lock acquire request is used to request a mutual trust lock for performing a write operation on the shared resource by the first thread, and the mutual trust lock is used for performing a non-exclusive write operation on the shared resource;
issuing the mutual trust lock to the first thread based on the first lock acquire request; and
concurrently performing, by the first thread and the second thread, write operations on the shared resource based on the mutual trust lock, wherein the second thread is a thread that has acquired the mutual trust lock.

2. The method according to claim 1, wherein the computing device is further configured to execute a third thread, the third thread is configured to perform a write operation on a global data unit of the shared resource, and the method further comprises:
receiving a second lock acquire request, wherein the second lock acquire request is used to request the mutual trust lock for performing a concurrent write operation on the shared resource by the third thread; and
after the first thread or the second thread acquires the mutual trust lock, the third thread waits for the mutual trust lock to be released.

3. The method according to claim 1 or 2, wherein issuing the mutual trust lock to the first thread based on the first lock acquire request comprises:
when a mutual trust lock status bit of the lock status variable is not set, setting the mutual trust lock status bit of the lock status variable based on the first lock acquire request, and performing incremental counting on a lock count bit of the lock status variable; or
when the mutual trust lock status bit of the lock status variable is set, performing incremental counting on the lock count bit of the lock status variable based on the first lock acquire request.

4. The method according to claim 3, wherein the method further comprises:
receiving a first lock release request of the first thread, wherein the first lock release request is used to request to release the mutual trust lock on the shared resource;
when the lock count bit of the lock status variable is greater than 1, performing decremental counting on the lock count bit of the lock status variable based on the first lock release request for the mutual trust lock; and
when the lock count bit of the lock status variable is equal to 1, performing decremental counting on the lock count bit of the lock status variable based on the first lock release request for the mutual trust lock, and restoring the mutual trust lock status bit of the lock status variable to being not set.

5. The method according to any one of claims 1 to 4, wherein the computing device is further configured to execute a fourth thread, the fourth thread is a thread that has held the mutual trust lock, the fourth thread is configured to perform a write operation on the first data unit of the shared resource, and the method further comprises:
receiving a third lock acquire request, wherein the third lock acquire request is used to request a segment lock for performing a write operation on the first data unit of the shared resource by the fourth thread, and the segment lock is used for exclusive access to the first data unit.

6. The method according to any one of claims 1 to 5, wherein the method further comprises:
when the first thread holds the mutual trust lock, another thread is incapable of holding a write lock and a read lock that correspond to the shared resource, wherein the write lock is used for performing an exclusive write operation on the shared resource, and the read lock is used for performing a non-exclusive read operation on the shared resource.

7. The method according to any one of claims 1 to 6, wherein the mutual trust lock is used for database transaction management, and the method further comprises:
concurrently performing, by a plurality of different threads, write operations on a transaction status in a database based on the mutual trust lock.

8. The method according to any one of claims 1 to 6, wherein the mutual trust lock is used for database page management, and the method further comprises:
concurrently performing, by a plurality of different threads, write operations on an entry in a database page based on the mutual trust lock.

9. A multi-thread concurrent access apparatus, wherein the apparatus is configured to execute a first thread and a second thread, the first thread is configured to perform a write operation on a first data unit of a shared resource, the second thread is configured to perform a write operation on a second data unit of the shared resource, the first data unit and the second data unit are different data units, and the apparatus comprises:
a transceiver unit, configured to receive a first lock acquire request, wherein the first lock acquire request is used to request a mutual trust lock for performing a write operation on the shared resource by the first thread, and the mutual trust lock is used for performing a non-exclusive write operation on the shared resource; and
a processing unit, configured to issue the mutual trust lock to the first thread based on the first lock acquire request, wherein
the first thread and the second thread of the processing unit concurrently perform write operations on the shared resource based on the mutual trust lock, and the second thread is a thread that has acquired the mutual trust lock.

10. The apparatus according to claim 9, wherein the apparatus is further configured to execute a third thread, the third thread is configured to perform a write operation on a global data unit of the shared resource, and the transceiver unit is further configured to:
receive a second lock acquire request, wherein the second lock acquire request is used to request the mutual trust lock for performing a concurrent write operation on the shared resource by the third thread; and
after the first thread or the second thread acquires the mutual trust lock, the third thread of the processing unit waits for the mutual trust lock to be released.

11. The apparatus according to claim 9 or 10, wherein the processing unit is specifically configured to:
when a mutual trust lock status bit of the lock status variable is not set, set the mutual trust lock status bit of the lock status variable based on the first lock acquire request, and perform incremental counting on a lock count bit of the lock status variable; or
when the mutual trust lock status bit of the lock status variable is set, perform incremental counting on the lock count bit of the lock status variable based on the first lock acquire request.

12. The apparatus according to claim 11, wherein the transceiver unit is further configured to:
receive a first lock release request of the first thread, wherein the first lock release request is used to request to release the mutual trust lock on the shared resource, wherein
when the lock count bit of the lock status variable is greater than 1, the processing unit is specifically configured to perform decremental counting on the lock count bit of the lock status variable based on the first lock release request for the mutual trust lock; and
when the lock count bit of the lock status variable is equal to 1, the processing unit is specifically configured to: perform decremental counting on the lock count bit of the lock status variable based on the first lock release request for the mutual trust lock, and restore the mutual trust lock status bit of the lock status variable to being not set.

13. The apparatus according to any one of claims 9 to 12, wherein the apparatus is further configured to execute a fourth thread, the fourth thread is a thread that has held the mutual trust lock, the fourth thread is configured to perform a write operation on the first data unit of the shared resource, and the transceiver unit is further configured to:
receive a third lock acquire request, wherein the third lock acquire request is used to request a segment lock for performing a write operation on the first data unit of the shared resource by the fourth thread, and the segment lock is used for exclusive access to the first data unit.

14. The apparatus according to any one of claims 9 to 13, wherein the processing unit is further configured to:
when the first thread holds the mutual trust lock, another thread is incapable of holding a write lock and a read lock that correspond to the shared resource, wherein the write lock is used for performing an exclusive write operation on the shared resource, and the read lock is used for performing a non-exclusive read operation on the shared resource.

15. The apparatus according to any one of claims 9 to 14, wherein the mutual trust lock is used for database transaction management, and the processing unit is further configured to concurrently perform, by a plurality of different threads, write operations on a transaction status in a database based on the mutual trust lock.

16. The apparatus according to any one of claims 9 to 14, wherein the mutual trust lock is used for database page management, and the processing unit is further configured to concurrently perform, by a plurality of different threads, write operations on an entry in a database page based on the mutual trust lock.

17. A computing device, comprising a processor, wherein the processor is coupled to a memory, the processor is configured to store instructions, and when the instructions are executed by the processor, the computing device is enabled to perform the method according to any one of claims 1 to 8.

18. A computing device cluster, comprising one or more computing devices, wherein the computing device comprises a processor, the processor is coupled to a memory, the processor is configured to store instructions, and when the instructions are executed by the processor, the computing device cluster is enabled to perform the method according to any one of claims 1 to 8.

19. A computer-readable storage medium, wherein the computer-readable storage medium stores instructions, and when the instructions are executed, a computer is enabled to perform the method according to any one of claims 1 to 8.

20. A computer program product, wherein the computer program product comprises instructions, and when the instructions are executed, a computer is enabled to implement the method according to any one of claims 1 to 8.
